# EUROPEAN PATENT SPECIFICATION

(11) **EP 3 436 690 B1**
(45) Date of publication and mention of the grant of the patent: **14.10.2020**
(21) Application number: 17720866.7
(22) Date of filing: 28.03.2017
(51) Int. Cl.: F03B 17/06

(54) **DEVICE FOR THE CONTINUOUS AND DISCRIMINATED POSITIONING OF EACH BLADE OF HYDRAULIC TURBINES AT VERTICAL AXIS**
VORRICHTUNG ZUR KONTINUIERLICHEN UND DISKRIMINIERTEN POSITIONIERUNG DER EINZELNEN SCHAUFELN EINER HYDRAULISCHEN TURBINE AN DER VERTIKALEN ACHSE
DISPOSITIF DE POSITIONNEMENT CONTINU ET DISCRIMINÉ DE CHAQUE PALE DE TURBINES HYDRAULIQUES AU NIVEAU D'UN AXE VERTICAL

(30) Priority: 01.04.2016 GB 201605578
(43) Date of publication of application: 06.02.2019
(73) Proprietor: Tulino, Rosario Rocco, London SW6 1SX (GB); Tulino Research & Partners Ltd., Stratford-upon-Avon, Warwickshire CV37 6AH (GB)
(72) Inventor: TULINO, Rosario, Rocco, Stratford-upon-Avon Warwickshire CV37 6AH (GB)
(86) International application number: PCT/IB2017/000336
(87) International publication number: WO 2017/168235

(56) References cited:
- DE-C- 494 685
- US-A- 4 380 417
- US-A- 5 324 164
- US-A1- 2011 262 268
- US-A1- 2014 308 130

## Description

Hydraulic turbines at free-flow with direct contact to streams (river or marine) symbolize a valid system of water kinetic energy. The Verdant Power Ltd. turbine, installed in East River of New York on 2008, represents the first example of such technique. Another example is disclosed in US 2014/308130 A1.

The three-blade rotor of turbines at horizontal axis is a classic configuration derived from wind application which, despite being relatively simple and reliable, produces somewhat modest returns in terms of fluid-dynamic efficiency.

The decision to use a turbine with blades arranged vertically can be an alternative solution both to improve the hydrodynamic efficiency and to simplify the construction of turbine of great dimensions since the one-way river stream does not require the utilization of devices for the modification of yaw rotation angle as well as to interpose a fifth-wheel coupling between the fix and mobile parts as required for the turbine for wind generators. This allows the use of assemblies of modest size, easy to carry and assembly directly on installation sites.

The hydrodynamic efficiency in the solution with vertical axis turbine, with discs and support arms (similarly to Darrieus and Kobold turbines, as examples of turbine with vertical axis) can be significantly improved by adopting a technological system of instant and proper orientation of the blades to allow a stream crossing free of interferences, thus overcoming the limit of the existing turbines that have a transverse crossing cross which is not quite free.

The critical points of the today used solutions can be overtaken by adopting a blades assembly system placed cantilever on the rotating barrel with different orientation grades for each blade thus allowing a continuous variation along the orbital path.

The kinetic energy of stream transverse crossing is efficiently converted into mechanical energy since the utilization of a turbine with vertical axis of large diameter allows the exploitation also of the geodetic energy that is determined by the difference in quota at the two counter posed extremes of the tilted barrel that holds the blades, condition non-obtainable in turbines with horizontal axis.

The essential condition for obtaining high hydrodynamic efficiency lies within the continuous orientation of the instantaneous angle of incidence that can be achieved through appropriate command and control of the blades position.

Computerized systems are already validly used within the substantive scope of engines with vertical axis, but the hydraulic turbines require extreme reliability and total absence of maintenance. These conditions can be achieved almost exclusively or in any case more easily, through the utilization of very sturdy mechanical systems devoid of specific electronic controls. The attention is therefore focused on systems with very sturdy kinematic control at electrical control.

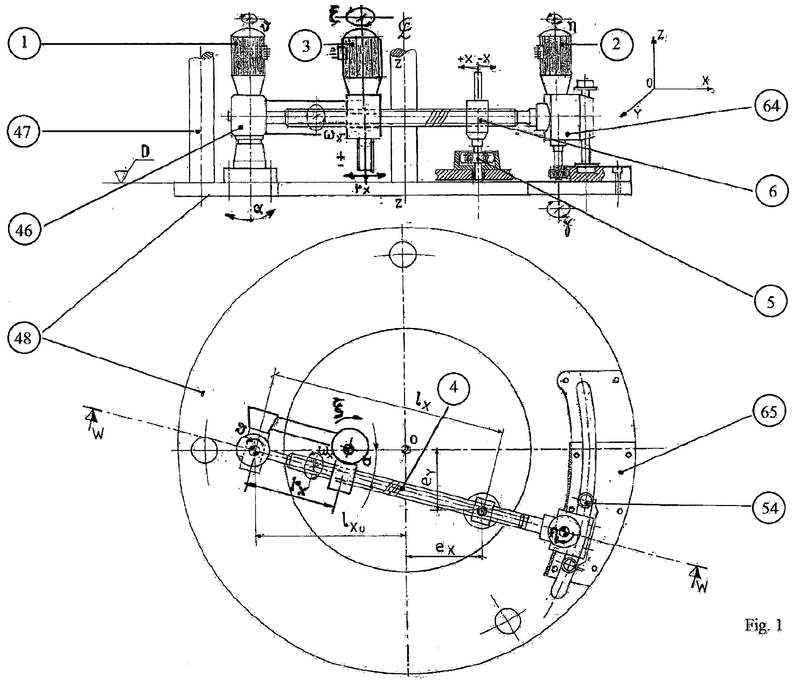

The device for the continuous and discriminated positioning of each blade of hydraulic turbines at vertical axis, subject of this industrial invention represents a real solution to reliability and very low maintenance problems (see Fig. 1, 2, 3, 4, 5).
Fig. 1 displays the three electrical stepper motors (ref. 1, 2, 3) connected to their own gear trains and in-built on the fix disc (ref. 48).

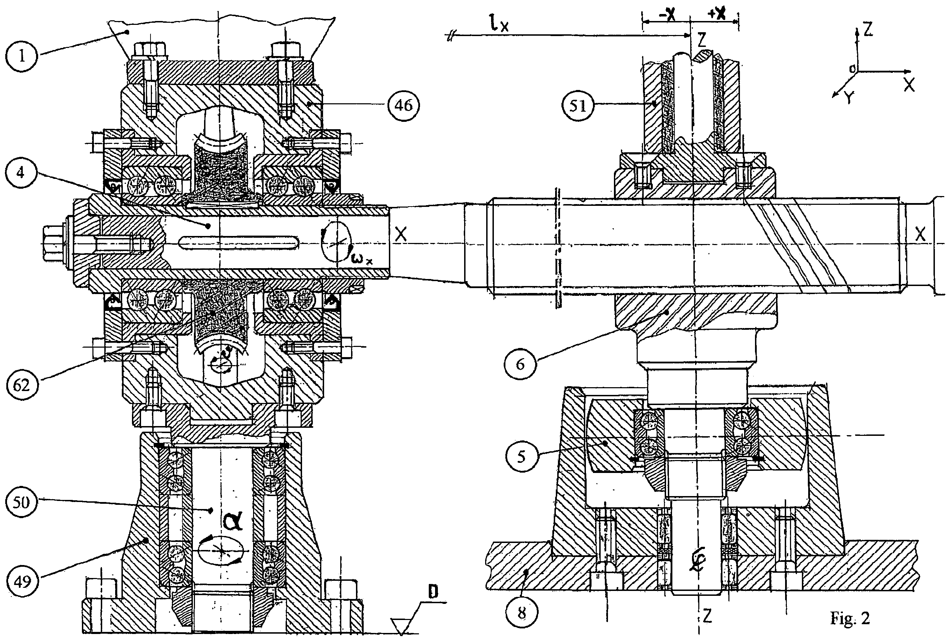

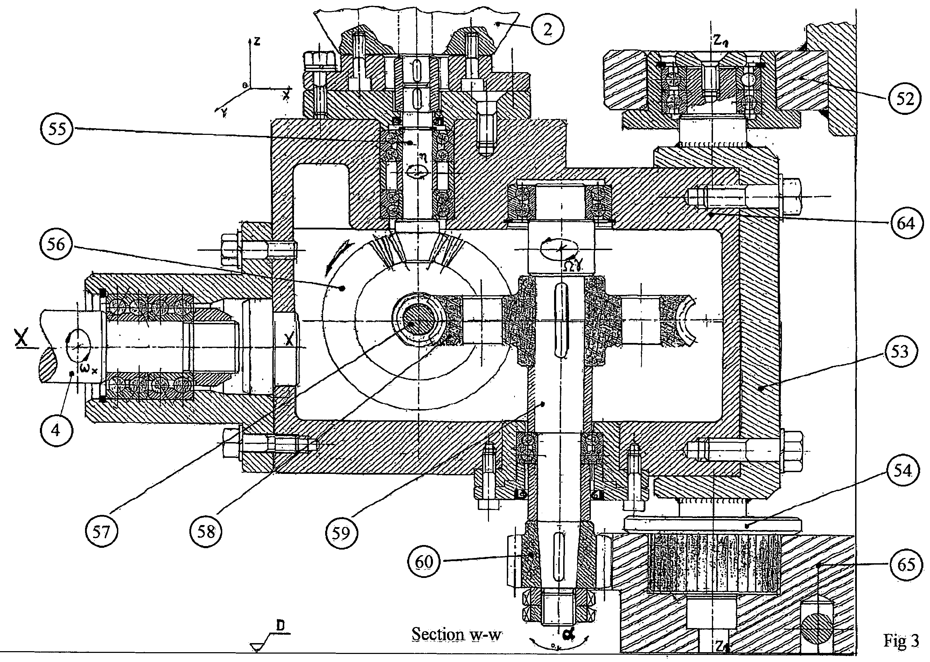

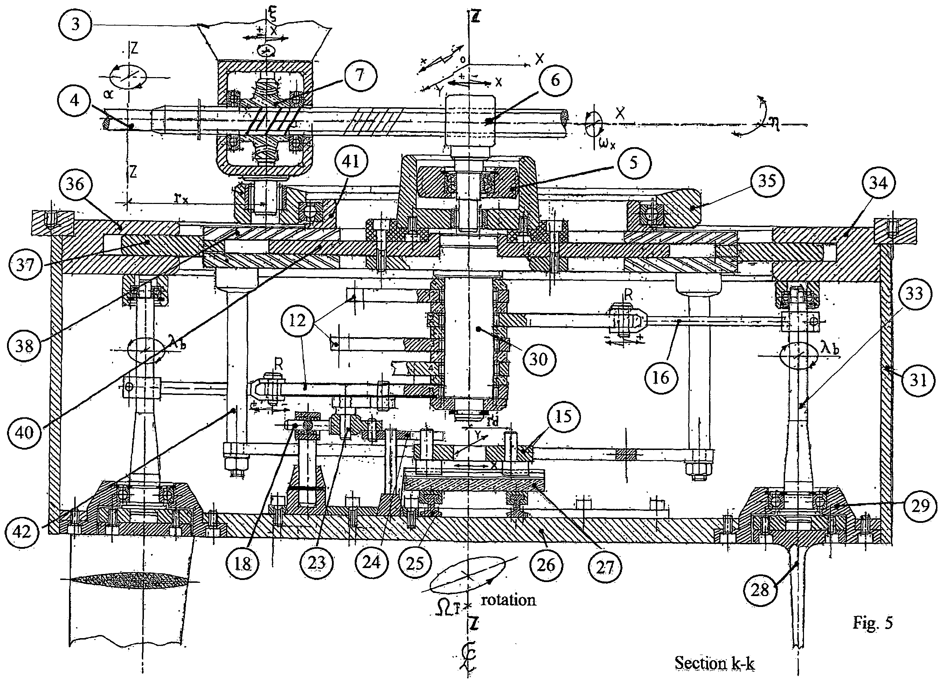

Fig. 2 displays the electrical stepper motor (ref. 1) connected with a flange to its own worm gearbox (ref. 46) whose crown gear (ref. 62) is rigidly connected to the end of the maneuvering and connection screw (ref. 4). The assembly (electrical stepper motor ref. 1; worm gear box ref. 46; maneuvering and connection screw ref. 4) can rotate on the pin (ref. 50) by an angle ***± α*** in respect to support (ref. 49), secured to disk (ref. 48 of Fig. 1) that is connected to the hydraulic turbine by means of pillars (ref. 47 of Fig. 1). The maneuvering and connection screw (ref. 4) is moved by the electrical stepper motor (ref. 1) receiving the rotary motion by the crown gear (ref. 62), while the other end of the maneuvering and connection screw (ref. 4) is idle on the support attached to the box (ref. 64 of Fig. 3). On the maneuvering and connection screw (ref. 4) are combined two separated female screws (ref.6 of Fig. 1 and Fig. 2; ref. 7 of Fig. 1 and Fig. 5). For a given rotation of the electrical stepper motor (ref. 1) the female screw (ref. 6) moves for a certain distance ***rx.*** On the female screw (ref. 6) is hinged, in idle status, the roller (ref. 5) that will move for the same distance ***rx.*** The idler roller (ref. 5) in connected to the fixed part of the hydraulic turbine and makes the repositioning ***rx*** of the housing support (ref. 8) that is instead connected to the floating disk (ref .40 of Fig. 5).

At the end of the support disk fixed to the frame of the hydraulic turbine (ref. 48 of Fig.1) is fastened the box (ref. 64 of Fig. 3) that allows to the maneuvering and connection screw (ref. 4) to swing an angle ***± α*** on pin (ref. 50 of Fig. 2). The grade of the maneuvering and connection screw (ref. 4) of an angle *α* is required in order to balance out the moderate deviation induced by the rotation of the hydraulic turbine to the direction of the free crossing flow.

On the far side of box (ref. 64 of Fig. 3) is bolted the plate (ref. 53 of Fig. 3) which holds the pins with the idle rollers (ref. 54 of Fig. 3) that allow the travel of the maneuvering and connection screw (ref. 4).

The idle rollers (ref. 54 of Fig. 3) are high-placed on slopes (ref. 52) and low-placed on slopes (ref. 65), which are connected to the support disk (ref. 48 of Fig. 1).

The electrical stepper motor (ref. 2 of Fig. 1) is flanged on top of box (ref. 64 of Fig. 3) that through a connecting joint sets in rotation the conical pinion (ref. 55), which engages the corresponding crown gear (ref. 56 of fig. 3). On the crown gear (ref. 56) is keyed in the endless screw (ref. 57) that engages the crown gear (ref. 58) that put in slow rotation the shaft (ref. 59), which has at its edge mounted the pinion (ref. 60) that engages the crown gear (ref. 65) secured to the support disk (ref. 48 of Fig.1).

Due to the high reduction ration of rpm, realized through shaft (ref. 55) and gear (ref. 60), the kinematic motion is irreversible ensuring the keeping of position of the maneuvering and connection screw (ref. 4) to angle ***α*** in any operating condition of the hydraulic turbine.

On the maneuvering and connection screw (ref. 4), in addition to the female screw (ref. 6 of Fig. 2), is screwed in another female screw (ref. 7 of Fig. 3), which is formed on outside by a crown gear that engages the endless screw put in rotation by the shaft of the electrical stepper motor (ref. 3 of Fig. 1 and Fig. 5).

The box containing the endless screw with outer crown gear (ref. 7) is free to swing onto the pivot of the support ring (ref. 35), which remains anchored on the fixed part of the hydraulic turbine, being interposed a bearing with rotating ring (ref. 41 of Fig. 5). Finally the upper part of the device integral to the fixed support disk (ref. 48 of Fig. 1) determines irreversibly the position of idler roller (ref. 5) and its relative support (ref. 8 of Fig. 2 and Fig. 5) and of ring (ref. 41).

The positioning comes from the preset rpm of the electrical stepper motors (ref. 1, 2, 3 of Fig.1).

Referring to the central vertical axis z-z of the hydraulic turbine, the idler roller (ref. 5 of Fig. 5) sets up the eccentricity value of floating disk (ref. 40 of Fig. 5), while the ring (ref. 41 of Fig. 5) sets up the disk value (ref. 37 Fig. 5).

The two disks (ref. 40 and ref. 37 of Fig. 5) are coplanar and orthogonal to the vertical axis of hydraulic turbine and transfer their eccentricities to kinematics hosted in the rotating barrel of hydraulic turbine.

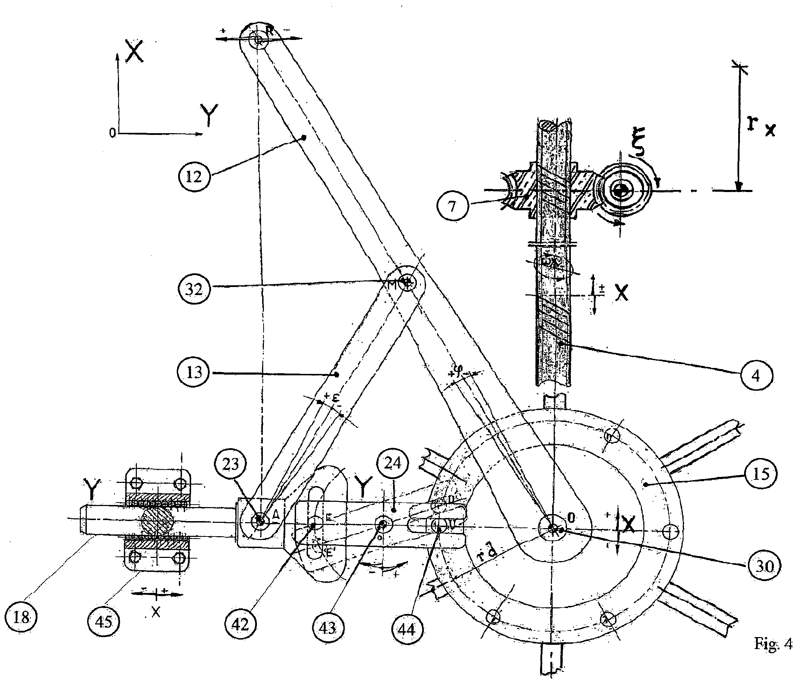

The pivot (ref. 30 0f Fig. 5) is integral to floating disk (ref. 40) and on it are inserted the levers (ref. 12 of Fig. 4 and Fig. 5) in equal number to their blade holder shafts (ref. 33).

The levers (ref. 12) are hinged in idle status on shaft (ref. 30). At the edge of each lever, there are the respective connecting rods (ref. 16 of Fig. 5) that set up the dimension ***λb*** of blade holder shafts (ref. 33) swing during the barrel rotation carrying out the blades (ref. 28) cycloidal orientation.

In the center line of levers (ref. 12 of Fig. 4 and Fig. 5) is hinged on the shaft (ref. 32) connecting the hinge (Ref. 13). The hinge (ref. 23) is articulately connected to the skid pins (ref. 18).

The connecting and transmission rod (ref. 24 of Fig. 4 and Fig. 5) receiving the transmission input from disk (ref. 15), moves the skid (ref. 18) through the pins (ref. 44) tied to it. The connecting and transmission rod (ref. 24 of Fig. 4 and Fig. 5) swing on pivot (ref. 43 of Fig. 4). The disk (ref. 15) set up the range of differential displacements of the position of the control main ring (ref. 41). The disk (ref. 15) and the control main ring (ref. 41) are connected by means of vertical pillars Ref. 42 of Fig. 5). Therefore, the change of position of ring (ref. 41) determines the corrective differentiation of size of ***λb*** swinging of each lever (ref. 12) connected to blade holder shafts (ref. 33) by means of respective connecting rods (ref. 16 of Fig. 5).

The bottom ring (ref. 27 of Fig. 5) has on both its parallel sides the slide guides that are orthogonal between them, respectively connected to disk (ref. 15) and rails (ref. 25). The rails are fastened to bottom of barrel (ref. 26).

The system of mutually orthogonal slides allows the transmission of rotary motion ***Ω**_{T}* from bottom of barrel (ref. 26) to disk (ref. 15), even in case there is pertaining offset from the central axis **z-z.**

All the hinged levers are enclosed between the disk of upper and lower ends (ref. 36 and ref. 26 of Fig. 5, respectively) and the external cylindrical layer (ref. 31). The rotating barrel is therefore formed by the layer (ref. 31) and disks (ref. 36 and ref. 26, respectively) on which are mounted the supports (ref. 29) of blade holder shafts.

Barrel and blades represent the rotating part of the hydraulic turbine that draws energy from the slowing down of river streams or from marine streams that pass through the turbine.

The device subject of this industrial invention allows creating the blades cycloidal differentiated path, allowing them to get the maximum power uptake from the flow of crossing stream for whatever speed, slope and swirl it may has.

The various paths allowed to blades using the device subject of this industrial invention have been simulated using numerous CFD (Computational Fluids Dynamics) that highlighted the excellent performance of the hydraulic vertical turbine in wide ranges of the parametric value of work.

## Claims

1. A device for the continuous and discriminated positioning of each blade of hydraulic turbines at vertical axis, that is able to improve the hydrodynamic efficiency in the solution with vertical axis turbine, with discs and support arms, i.e. similarly to Darrieus and Kobold turbines, **characterized by** the arrangement of three electrical stepper motors on a single maneuvering screw for handling rotary-transfer and swinging movement of the blades and by
the utilization of two separated coplanar floating disks placed on a rotating barrel layer, having:
- a first electrical stepper motor (ref. 1 of Fig. 2) connected with a flange to its own worm gearbox (ref. 46 of Fig. 2) whose first crown gear (ref. 62 of Fig. 2) is rigidly connected to an end of a maneuvering and connection screw (ref. 4 of Fig. 2);
- an assembly formed by a the first electrical stepper motor (ref. 1 of Fig. 2), its own worm gearbox (ref. 46 of Fig. 2), the maneuvering and connection screw (ref. 4 of Fig. 2), that can rotate on a pin (ref. 50) by an angle ± α in respect to a support (ref. 49), secured to a disk (ref. 48 of Fig. 1) that is connected to the hydraulic turbine by means of pillars (ref. 47 of Fig. 1);
- the maneuvering and connection screw (ref. 4) that is moved by the first electrical stepper motor (ref. 1) receiving the rotary motion by the first crown gear (ref. 62), while the other end of the maneuvering and connection screw (ref. 4) is idle on the support attached to a box (ref. 64 of Fig. 3);
- On the maneuvering and connection screw (ref. 4) are combined two separated female screws (ref.6 of Fig. 1 and Fig. 2; ref. 7 of Fig. 1 and Fig. 5), whereby for a given rotation of the first electrical stepper motor (ref. 1) the first female screw (ref. 6) moves for a certain distance rx:
- On the first female screw (ref. 6) is hinged, in idle status, a roller (ref. 5) that will move for the same distance rx, whereby the idler roller (ref. 5) is connected to the fixed part of the hydraulic turbine and makes the repositioning rx of the housing support (ref. 8) that is instead connected to another floating disk (ref .40 of Fig. 5);
- A second electrical stepper motor (ref. 2 of Fig. 1) is flanged on top of the box (ref. 64 of Fig. 3) that through a connecting joint sets in rotation a conical pinion (ref. 55), which engages a corresponding second crown gear (ref. 56 of fig. 3).
- On the second crown gear (ref. 56) is keyed in an endless screw (ref. 57) that engages a third crown gear (ref. 58) that put in slow rotation a shaft (ref. 59), which has at its edge mounted a pinion (ref. 60) that engages a fourth crown gear (ref. 65) secured to the support disk (ref. 48 of Fig.1).

2. A device as claimed in **claim 1 characterized by** the motion irreversibility of each of the three electrical stepper motors, connected to their own gear trains, condition required to maintain the position even in case of electrical power failure supply to the electrical stepper motors.

3. A device as claimed in **claim** 1 **characterized by** the fastening of maneuvering system composed by electrical stepper motors - gear trains - screw to a single support disk linked to the external frame supporting the hydraulic turbine.

4. A device as claimed in **claim 1 characterized by** the utilization of two separated coplanar floating disks (ref. 37 and 40 of Fig. 5), one inside the other one and both placed on the rotating barrel layer (ref. 31 of Fig. 5)

5. A device as claimed in **claim 4 characterized by** the coaxial fastening of the internal floating disk (ref. 40 of Fig. 5) to a central joint pivot (ref. 30 of Fig.5) with levers in idle status (ref. 12 of Fig. 4 and 5)

6. A device as claimed in **claim 5**, **characterized by** the stacked and sequential arrangement on the central joint pivot (ref. 30 of Fig. 5) holding the levers in idle status.

7. A device as claimed in **claim** 5 **characterized by** the utilization of two articulated rods, for each blade holder shaft, of which one is hinged on the central joint pivot and the second one hinged between the center line of the first and one guide skid pin.

8. A device as claimed in **claim 7 characterized by** the utilization of linear guide slopes (ref. 52 and 65 of Fig. 3) whose support is linked to the bottom of the rotating housing (ref. 8 of Fig. 2) which bears a hinged pivot of the second rod, and at the end has a guide loop for motion control pivot sliding

9. A device as claimed in **claim 4 characterized by** the utilization of a lever hinged to a pivot linked to the bottom of the rotating housing (ref. 8 of Fig. 2), at one end there is a pivot inside the skid guide loop, while at the other end there is a guide loop for motion control pivot sliding (ref. 18 and 44 of Fig. 4)

10. A device as claimed in **claim 4 characterized by** the utilization of a floating disk with spokes (ref. 40 of Fig. 5), the disk itself has pivots for levers motion control and the spokes are connected to external floating disk (ref. 37 of Fig.5) by means of pillars

11. A device as claimed in **claim 7 characterized by** the utilization of orthogonal guide skids with an interposed halfway support disk, one skid is linked to rotating barrel bottom, while the other one is linked to the floating disk with spokes (ref. 40 of Fig. 5)

12. A device as claimed in **claim 7 characterized by** the utilization of connecting rods between levers (ref. 12 of Fig. 4) hinged to joint pivot and the blade holder shafts

13. A device as claimed in **claim 7 characterized by** the utilization of screw locking keying on the blades holder shafts connected to the rods

14. A device as claimed in **claim 7 characterized by** the assembly of the blades holder shafts on two end bearings, one linked to the bottom and the other one to the cover of the rotating housing (ref. 8 of Fig. 2)

## Patentansprüche

1. Eine Vorrichtung zur kontinuierlichen und unterschiedlichen Positionierung jeder Schaufel von Hydraulikturbinen an der vertikalen Achse, die in der Lage ist, den hydrodynamischen Wirkungsgrad in der Lösung mit einer Turbine mit vertikaler Achse, mit Scheiben und Tragarmen zu verbessern, d. h. ähnlich wie bei Darrieus- und Kobold-Turbinen, **gekennzeichnet durch** die Anordnung von drei elektrischen Schrittmotoren auf einer einzigen Manövrierschraube zur Handhabung der Rotationsübertragungs- und Schwenkbewegung der Schaufeln und durch die Verwendung von zwei getrennten koplanaren Schwimmscheiben, die auf einer rotierenden Zylinderebene angeordnet sind, mit:
- einem ersten elektrischer Schrittmotor (Ref. 1 von Abb. 2) über einen Flansch mit einem eigenen Schneckengetriebe verbunden (Ref. 46 von Abb. 2), dessen erstes Kronenrad (Ref. 62 von Abb. 2) starr mit einem Ende einer Manövrier- und Verbindungsschraube verbunden ist (Ref. 4 von Abb. 2);
- eine Anordnung, die aus dem ersten elektrischen Schrittmotor besteht (Ref. 1 von Abb. 2), seinem Schneckengetriebe (Ref. 46 von Abb. 2), der Manövrier- und Verbindungsschraube (Ref. 4 von Abb. 2), die sich auf einem Stift drehen kann (Ref. 50), um einen Winkel ± α in Bezug auf einen Träger (Ref. 49), auf einer Platte gesichert (Ref. 48 von Abb. 1), die über Säulen mit der Hydraulikturbine verbunden ist (Ref. 47 von Abb. 1);
- der Manövrier- und Verbindungsschraube (Ref. 4), die vom ersten elektrischen Schrittmotor bewegt wird (Ref. 1) und die Drehbewegung durch das erste Kronenrad erhält (Ref. 62), während das andere Ende der Manöver- und Verbindungsschraube (Ref. 4) sich auf dem an einer Box befestigten Träger im Leerlauf befindet (Ref. 64 von Abb. 3);
- Auf der Manövrier- und Verbindungsschraube (Ref. 4) befinden sich zwei getrennte Innenschrauben (Ref.6 von Abb. 1 und Abb. 2; Ref. 7 von Abb. 1 und Abb. 5), wobei sich bei einer gegebenen Drehung des ersten elektrischen Schrittmotors (Ref. 1) die erste Innenschraube (Ref. 6) über eine bestimmte Strecke rx bewegt:
- 1) Auf der ersten Innenschraube (Ref. 6) befindet sich eine angelenkte Rolle im Leerlauf (Ref. 5), die sich um die gleiche Strecke rx bewegt, wobei die Umlenkrolle (Ref. 5) mit dem festen Teil der Hydraulikturbine verbunden ist und die Neupositionierung des Gehäuseträgers bewirkt (Ref. 8), die stattdessen mit einer anderen schwimmenden Platte verbunden ist (Ref.40 von Abb. 5);
- Ein zweiter elektrischer Schrittmotor (Ref. 2 von Abb. 1) ist oben auf der Box angeflanscht (Ref. 64 von Abb. 3), der über ein Verbindungsgelenk ein konisches Ritzel in Rotation versetzt (Ref. 55), über das ein entsprechendes zweites Kronenrad einrastet (Ref. 56 von Abb. 3).
- Das zweite Kronenrad (Ref. 56) ist mit einer Endlosschraube versehen (Ref. 57), über die ein drittes Kronenrad einrastet (Ref. 58), das eine Welle in eine langsame Drehung versetzt (Ref. 59), an deren Rand ein Ritzel angebracht ist (Ref. 60), mit dem ein viertes Kronenrad einrastet (Ref. 65), das an der Trägerscheibe befestigt ist (Ref. 48 von Abb. 1).

2. Eine Vorrichtung, wie nach **Anspruch 1, gekennzeichnet durch** die Irreversibilität der Bewegung jedes der drei elektrischen Schrittmotoren, die mit ihren eigenen Getriebezügen verbunden sind, eine Bedingung, die erforderlich ist, um die Position auch im Falle eines Stromausfalls der elektrischen Schrittmotoren aufrechtzuerhalten.

3. Eine Vorrichtung, wie nach **Anspruch 1, gekennzeichnet durch** die Befestigung eines Manövriersystems, bestehend aus elektrischen Schrittmotoren - Getriebezügen - die an eine einzelne, mit dem Außenrahmen verbundene Trägerscheibe angeschraubt sind, die die Hydraulikturbine trägt.

4. Eine Vorrichtung, wie nach **Anspruch 1, gekennzeichnet durch** den Einsatz von zwei getrennten koplanaren Schwimmscheiben (Ref. 37 und 40 von Abb. 5), jeweils eine in die andere eingesetzt und beide auf der rotierenden Zylinderebene angeordnet (Ref. 31 von Abb. 5).

5. Eine Vorrichtung, wie nach **Anspruch 4, gekennzeichnet durch** die koaxiale Befestigung der inneren Schwimmscheibe (Ref. 40 von Abb. 5) an einem zentralen Gelenkzapfen (Ref. 30 von Abb. 5), mit Hebeln im Leerlauf (Ref. 12 von Abb. 4 und 5).

6. Eine Vorrichtung, wie nach **Anspruch 5, gekennzeichnet durch** die gestapelte und sequenzielle Anordnung am zentralen Gelenkzapfen (Ref. 30 von Abb. 5), die die Hebel im Leerlauf hält.

7. Eine Vorrichtung, wie **nach Anspruch 5** , **gekennzeichnet durch** die Verwendung von zwei Gelenkstangen für jede Schaufelhalterwelle, von denen eine am zentralen Gelenkzapfen und die zweite zwischen der Mittellinie des ersten und eines Führungsstift des Gestells angelenkt ist.

8. Eine Vorrichtung, wie nach **Anspruch 7, gekennzeichnet durch** den Einsatz von linearen Führungsneigungen (Ref. 52 und 65 von Abb. 3), deren Träger mit dem Boden des rotierenden Gehäuses verbunden ist (Ref. Abb. 8), das einen Gelenkzapfen der zweiten Stange trägt und am Ende eine Führungsschlaufe für die Verschiebung des Bewegungssteuerungszapfens aufweist.

9. Eine Vorrichtung, wie nach **Anspruch 4, gekennzeichnet durch** den Einsatz eines Hebels, der an einem Drehpunkt angelenkt ist, der mit dem Boden des rotierenden Gehäuses angelenkt ist (Ref. 8 von Abb. 2), an einem Ende befindet sich ein Drehpunkt innerhalb der Gleitführungsschleife, während sich am anderen Ende eine Führungsschleife für die Verschiebung des Bewegungssteuerungszapfens befindet (Ref. 18 und 44 von Abb. 4).

10. Eine Vorrichtung, wie nach **Anspruch 4, gekennzeichnet durch** den Einsatz einer Schwimmscheibe mit Speichen (Ref. 40 von Abb. 5), die Scheibe selbst hat Drehzapfen für die Bewegungssteuerung der Hebel und die Speichen sind über Säulen mit einer externen Schwimmscheibe verbunden (Ref. 37 von Abb. 5).

11. Eine Vorrichtung, wie nach **Anspruch 7, gekennzeichnet durch** den Einsatz von orthogonalen Führungsschlitten mit einer dazwischenliegenden halben Trägerscheibe, wobei ein Schlitten mit einem rotierenden Zylinderboden verbunden ist, während der andere mit der mit Speichen versehenen Schwimmscheibe verbunden ist (Ref. 40 von Abb. 5).

12. Eine Vorrichtung, wie nach **Anspruch 7, gekennzeichnet durch** den Einsatz von Stangen zwischen Hebeln (Ref. 12 von Abb. 4), angelenkt über Gelenkzapfen und den Schaufelhalterwellen.

13. Eine Vorrichtung, wie nach **Anspruch 7, gekennzeichnet durch** den Einsatz eines Schraubenverriegelungsschlüssels an den mit den Stangen verbundenen Schaufelhalterwellen.

14. Eine Vorrichtung, wie nach **Anspruch 7, gekennzeichnet durch** die Montage der Schaufelhalterwellen an zwei Endlagern, von denen eines mit dem Boden und das andere mit dem Deckel des rotierenden Gehäuses verbunden ist (Ref. 8 von Abb. 2).

## Revendications

1. Un dispositif pour le positionnement continu et discret de chaque pale de turbines hydrauliques à axe vertical, capable d'améliorer le rendement hydrodynamique dans la solution avec turbine à axe vertical, avec disques et bras de support, c'est-à-dire de manière similaire aux turbines Darrieus et Kobold, **caractérisé par** l'agencement de trois moteurs pas à pas électriques sur une seule vis de manœuvre pour gérer le mouvement de transfert rotatif et d'oscillation des pales et par l'utilisation de deux disques flottants coplanaires séparés placés sur une couche de barillet rotatif, ayant :
- un premier moteur électrique pas à pas (réf. 1 de la Fig. 2) relié par une bride à sa propre boîte de transmission à vis sans fin (réf. 46 de la Fig. 2) dont la première couronne dentée (réf. 62 de la Fig. 2) est solidarisée à une extrémité d'une vis de manœuvre et de connexion (réf. 4 de la figure 2) ;
- un ensemble formé par le premier moteur électrique pas à pas (réf. 1 de la Fig. 2), sa boîte de transmission à vis sans fin (réf. 46 de la Fig. 2), la vis de manœuvre et de connexion (réf. 4 de la Fig. 2), qui peut tourner sur un axe (réf. 50) d'un angle ± α par rapport à un support (réf. 49), fixée sur un disque (réf. 48 de la Fig. 1) qui est relié à la turbine hydraulique au moyen de piliers (réf. 47 de la figure 1) ;
- la vis de manœuvre et de connexion (réf. 4) qui est déplacée par le premier moteur électrique pas à pas (réf. 1) recevant le mouvement de rotation par la première couronne dentée (réf. 62), tandis que l'autre extrémité de la vis de manœuvre et de connexion (réf. 4) est au repos sur le support attaché à un caisson (réf. 64 de la figure 3) ;
- Sur la vis de manœuvre et de connexion (réf. 4), deux vis femelles séparées sont combinées (réf.6 de la Fig. 1 et de la Fig. 2 ; réf. 7 de la Fig. 1 et Fig. 5), moyennant quoi pour une rotation donnée du premier moteur électrique pas à pas (réf. 1) la première vis femelle (réf. 6) se déplace sur une certaine distance rx:
- Sur la première vis femelle (réf. 6) un galet est articulé, au repos, (réf. 5) qui se déplacera sur la même distance rx ; le galet au repos (réf. 5) se raccorde à la partie fixe de la turbine hydraulique et effectue le repositionnement rx du support de carter (réf. 8) qui est à la place connecté à un autre disque flottant (réf.40 de la figure 5) ;
- Un deuxième moteur électrique pas à pas (réf. 2 de la Fig. 1) est bridé sur le dessus du caisson (réf. 64 de la Fig. 3) qui, par l'intermédiaire d'un joint de liaison, met en rotation un pignon conique (réf. 55), qui engage une seconde couronne dentée correspondante (réf. 56 de la fig. 3).
- Sur la deuxième couronne dentée (réf. 56) est enfoncée dans une vis sans fin (réf. 57) qui engage une troisième couronne dentée (réf. 58) qui mettent en rotation lente un arbre (réf. 59), qui a un pignon monté sur son extrémité (réf. 60) qui engage une quatrième couronne dentée (réf. 65) solidaire du disque support (réf. 48 de la figure 1).

2. Un dispositif selon la **revendication 1, caractérisé par** l'irréversibilité du mouvement de chacun des trois moteurs électriques pas à pas, connectés à leurs propres trains d'engrenages, condition requise pour maintenir la position même en cas de panne de courant électrique d'alimentation des moteurs électriques pas à pas.

3. Un dispositif selon la **revendication 1 caractérisé par** la fixation d'un système de manœuvre composé par des moteurs électriques pas à pas - trains d'engrenages - vissés sur un seul disque de support lié au bâti externe supportant la turbine hydraulique.

4. Un dispositif selon la **revendication 1, caractérisé par** l'utilisation de deux disques flottants coplanaires séparés (réf. 37 et 40 de la Fig. 5), l'un à l'intérieur de l'autre et tous deux placés sur la couche de canon rotatif (réf. 31 de la Fig. 5)

5. Un dispositif selon la **revendication 4, caractérisé par** la fixation coaxiale du disque flottant interne (réf. 40 de la Fig. 5) à un pivot d'articulation centrale (réf. 30 de la Fig. 5) avec des leviers au repos (réf. 12 de la Fig. 4 et 5)

6. Un dispositif selon la **revendication 5, caractérisé par** la disposition empilée et séquentielle sur le pivot d'articulation central (réf. 30 de la Fig. 5) en maintenant les leviers au repos.

7. Un dispositif selon la **revendication 5, caractérisé par** l'utilisation de deux tiges articulées, pour chaque arbre porte-lame, dont l'une est articulée sur le pivot d'articulation central et la seconde articulée entre la ligne médiane du premier et un axe de patin de guidage.

8. Un dispositif selon la **revendication 7, caractérisé par** l'utilisation d'une pente de guidage linéaire (réf. 52 et 65 de la Fig. 3) dont le support est lié au fond du boîtier rotatif (réf. 8 de la Fig. 2) qui porte un pivot articulé de la deuxième tige, et, à l'extrémité, a une boucle de guidage pour le glissement du pivot de commande de mouvement

9. Un dispositif selon la **revendication 4, caractérisé par** l'utilisation d'un levier articulé sur un pivot lié au fond du boîtier rotatif (réf. 8 de la figure 2) ; à une extrémité, il y a un pivot à l'intérieur de la boucle de guidage du patin, tandis qu'à l'autre extrémité, il y a une boucle de guidage pour le coulissement du pivot de commande de mouvement (réf. 18 et 44 de la Fig. 4)

10. Un dispositif selon la **revendication 4, caractérisé par** l'utilisation d'un disque flottant à rayons (réf. 40 de la Fig. 5) ; le disque lui-même a des pivots pour la commande de mouvement des leviers et les rayons sont reliés à un disque flottant externe (réf. 37 de la figure 5) au moyen de piliers

11. Un dispositif selon la **revendication 7, caractérisé par** l'utilisation de patins de guidage orthogonaux avec un disque de support à mi-chemin interposé, un patin est lié au fond du canon rotatif, tandis que l'autre est lié au disque flottant avec des rayons (réf. 40 de la figure 5)

12. Un dispositif selon la **revendication 7, caractérisé par** l'utilisation de bielles entre les leviers (réf. 12 de la Fig. 4) articulé sur le pivot d'articulation et les arbres porte-lame

13. Un dispositif selon la **revendication 7, caractérisé par** l'utilisation d'un clavetage de verrouillage à vis sur les arbres porte-lames reliés aux tiges.

14. Un dispositif selon la **revendication 7 caractérisé par** l'assemblage des arbres porte-lames sur deux paliers d'extrémité, l'un lié au fond et l'autre au couvercle du carter tournant (réf. 8 de la Fig. 2)
